(19) Europäisches Patentamt
European Patent Office
Office européen des brevets

(11) **EP 3 441 979 A2**

(12) **EUROPEAN PATENT APPLICATION**
published in accordance with Art. 153(4) EPC

(43) Date of publication:
**13.02.2019 Bulletin 2019/07**

(51) Int Cl.:
**G21C 19/32** *(2006.01)* **G21F 9/34** *(2006.01)*

(21) Application number: **17775973.5**

(86) International application number:
**PCT/RU2017/000179**

(22) Date of filing: **29.03.2017**

(87) International publication number:
**WO 2017/171587 (05.10.2017 Gazette 2017/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **01.04.2016 RU 2016112291**

(71) Applicants:
• **Joint Stock Company "Russian Generation Concern of**
**Electrical and Thermal Energy by its Nuclear Plants" (Rosenergoatom Concern JSC)**
**Moscow 109507 (RU)**
• **Joint Stock Company "Afrikantov OKB Mechanical**
**Engineering"**
**G. Nizhniy Novgorod 603074 (RU)**

• **Joint Stock Company "Science and Innovations"**
**Moscow 119180 (RU)**

(72) Inventors:
• **VORONIN, Yuriy Vladimirovich**
**g. Nizhniy Novgorod 603074 (RU)**
• **RUSAKOV, Sergey Sergeevich**
**Nizhegorodskaya obl.**
**g. Bor 606440 (RU)**
• **LYUBIMOV, Mikhail Anatol'evich**
**g. Nizhniy Novgorod 603043 (RU)**
• **TIMOFEEV, Aleksandr Vladimirovich**
**g. Nizhniy Novgorod 603159 (RU)**

(74) Representative: **Friese Goeden Patentanwälte PartGmbB**
**Widenmayerstraße 49**
**80538 München (DE)**

(54) **INCLINED ELEVATOR OF A NUCLEAR REACTOR**

(57) The invention relates to the field of nuclear engineering and can be used as part of handling equipment of nuclear reactor.

The engineering challenge of the proposed invention is to ensure the cable movement rectilinearity with an increase in the inclination angle of the inclined corridor in the inclined hoist

Solving the assigned task allows reducing the size of openings in walls of the building of the reactor compartment and the suppression pool which the trolley travels over.

The inclined hoist of a nuclear reactor comprising a trolley 1 with a sleeve 2 for SFA, which moves along a rail track 3 in an inclined corridor 4 by means of a cable 8. At the entry into the inclined corridor 4, a guide block is installed, equipped with an asymmetric channel for routing the cable and installed at an angle β relative to the track, satisfying the condition:

$$\mathbf{tg\ \beta = t/\pi D}$$

where β is an angle of inclination of the guide block to the track;
**t** is a pitch of cable grooves on the drum;
**D** is a diameter of the drum, wherein the guide block channel symmetry axis is located along the cable movement trajectory.

Fig. 1

**Description**

The invention relates to the field of nuclear engineering and can be used as part of handling equipment of nuclear reactor.

A fast neutron nuclear reactor with a sodium coolant is known, that uses an inclined hoist (conveyor) to handle spent fuel assemblies (SFA), wherein the upper part of the hoist is located in the gas atmosphere of an discharge pit, and the lower part - in the water of a suppression pool (Moscow, Mashinostroyeniye, 2005, "Machine building in nuclear industry", Book 1, Volume IV-25, p.345).

Arrangement of the inclined hoist and the suppression pool with cooling water in the same building as the reactor reduces the reactor unit reliability and safety, since in case if the suppression pool wall loses tightness in an emergency situation (for example, during an earthquake), water can enter a room with radioactive sodium equipment of the primary circuit, which can lead, with the active interaction of sodium with water, to a fire with severe radiation consequences.

A small angle of inclination of the track to the horizon plane leads to a large length of the track section which a trolley of the inclined hoist with SFA travels over in the gas atmosphere. In an emergency situation related to the loss of power supply, SFA gets stuck in the gas atmosphere, which leads to its overheating due to own residual heat release, to the loss of tightness of the fuel elements' shells and the release of radioactive fission products into rooms of the reactor unit.

An inclined hoist of nuclear reactor is known, containing a drive, a drum with a cable, a trolley with a sleeve for installation of SFA, and a rectilinear track with an upper and lower stops (utility model patent No. 77489), which is taken as a prototype in terms of the most essential characteristics.

In the event of a power failure, the trolley with SFA of this inclined hoist can be moved to the suppression pool water using a manual drive, which is specified in safety regulatory documents. However, due to the fact that the speed of moving the trolley with SFA using manual drive is much lower than the speed of moving the trolley using the electric drive, there is a restriction on the length of the track section that the trolley with SFA can pass in the gas atmosphere without exceeding the permissible temperature of the fuel elements' shells. This problem is especially relevant for large power reactors with a long rail track (for instance, the suppression pool is located in a detached building) and heavy SFAs (the heavier the SFAs and the trolley, the lower the speed of moving the trolley with SFA using manual drive).

The engineering challenge of the proposed invention is to ensure the cable movement rectilinearity with an increase in the inclination angle of the inclined corridor in the inclined hoist

Solving the assigned task allows reducing the size of openings in walls of the building of the reactor compartment and the suppression pool which the trolley travels over.

The task is solved by installing a guide block in the inclined hoist of the nuclear reactor, which comprises a trolley with a sleeve for installation of spent fuel assemblies moving along a rail track in an inclined corridor, a drum with a cable, a drive, at the entrance to the inclined corridor, wherein this block has a channel for passage of the cable and is installed under angle $\beta$ relative to the track, satisfying the condition: $\mathbf{tg}\ \beta = \mathbf{t}/\pi\mathbf{D}$

where $\beta$ is an angle of inclination of the guide block to the track;

$\mathbf{t}$ is a pitch of cable grooves on the drum;

$\mathbf{D}$ is a diameter of the drum, the guide block channel being asymmetrical, and its axis being located along the cable movement trajectory.

The essence of the technical solution is explained in the drawings, where:

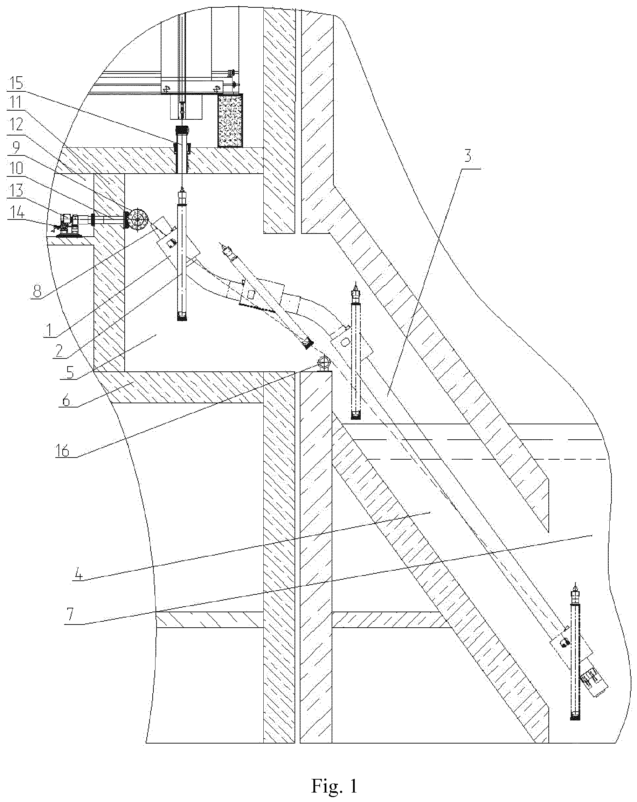

- Fig. 1 shows a longitudinal section of the inclined hoist;

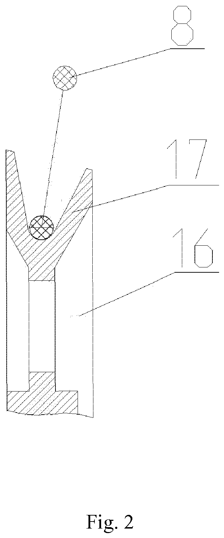

- Fig. 2 shows a cross section of the guide block channel;

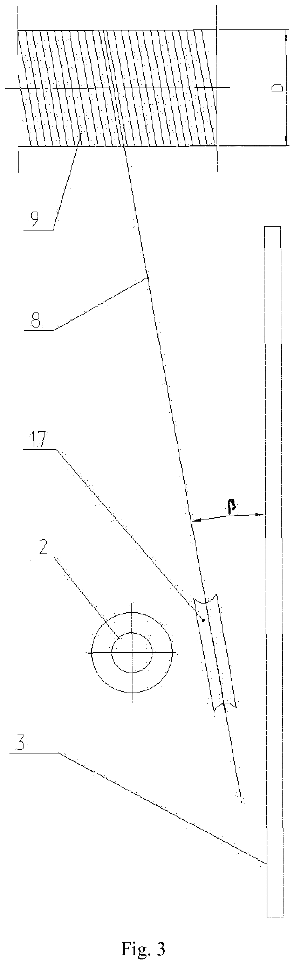

- Fig. 3 shows the cable movement trajectory.

The inclined hoist includes a trolley 1 with a rigidly fixed sleeve 2 for SFA, moving along a rail track 3 located in an inclined corridor 4 connecting the discharge pit 5 of the reactor building 6 to the suppression pool 7. The trolley 1 is connected to a drum 9 by means of a cable 8.

The drum 9 is mounted on a penetration 10 located in a protective wall 11 between the discharge pit 5 and an operator room 12, where an electric drive 13 connected to the penetration 10 is installed, provided with a manual drive 14. There is a channel 15 in the ceiling of the discharge pit 5, through which the SFA is installed in the trolley 1 sleeve 2.

In large power reactors, the inclination angle of the inclined corridor 4 is increased in order to shorten the track length or, for example, in cases when the suppression pool is arranged in a detached building.

A large inclination angle of the inclined corridor 4 does not allow preserving the rectilinearity of the cable 8 trajectory when the trolley 1 is lowered into the suppression pool 7. To preserve the rectilinearity of the cable 8 trajectory, a guide block 16 provided with a channel 17 is installed at the entrance to the inclined corridor 4.

The cable 8 enters the channel 17 of the guide block 16 only when the trolley 1 is in the suppression pool. Wherein, when the cable 8 enters the channel 17 of the guide block 16, the cable 8, in addition to its vertical movement during the lowering of the trolley, also moves in the transverse direction due to lateral displacement of the cable 8 when it is unwound from the drum 9 with threaded grooves. To ensure a minimum deviation of the cable 8 from the channel 17 plane of the guide block 16, the latter is installed at the same angle relative to the track 3 as the cable 8 when it is unwound from the drum 9 during the lowering of the trolley 1. In case of the standard mutually perpendicular position of the drum 9 axis and the rail track 3, the angle between the cable and the track is kept constant from the drum to the guide block and is determined from the equation:

$$\textrm{tg } \beta = t/\pi D$$

where $\beta$ is an angle of inclination of the cable to the track;
**t** is a pitch of cable grooves on the drum;
**D** is a diameter of the drum.

To ensure the maximum contact area between the cable 8 and the channel 17 of the guide block 16 (which increases the cable life), the symmetry axis 18 of the channel 17 of the guide block 16 is directed along the trajectory of the cable 8 at the time of its entry into the block channel.

The asymmetric arrangement of the channel allows reducing the guide block dimensions and thereby increasing the clearance between the guide block 16 and the adjacent trolley 1 sleeve.

The inclined hoist is operated as follows.

In the process of handling through the channel 15, SFA is loaded into the sleeve 2 of the trolley 1. The trolley 1 is moved by the electric drive 13 from the upper position in the discharge pit 5 to the lower position in the suppression pool 7 where SFA is handled to storage compartments.

The empty trolley is lifted to the discharge pit 5 and the handling cycle is repeated until the SFA is completely unloaded from the reactor.

The proposed technical solution allows improving the safe working conditions of the inclined hoist.

**Claims**

1.  The inclined hoist of a nuclear reactor, comprising a trolley with a sleeve for installation of spent fuel assemblies moving along a rail track in an inclined corridor, a drum with a cable, a drive, **characterized in that** a guide block is installed at the entrance to the inclined corridor, wherein this block has a channel for passage of the cable and is installed under angle $\beta$ relative to the track, satisfying the condition:

$$\textrm{tg } \beta = t/\pi D$$

where $\beta$ is an angle of inclination of the guide block to the track;
**t** is a pitch of cable grooves on the drum;
**D** is a diameter of the drum.

2.  The inclined hoist according to claim 1, **characterized in that** the guide block channel is asymmetric, and its axis is located along the cable movement trajectory.

Fig. 1

Fig. 2

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

• Machine building in nuclear industry. Mashinostroy-eniye, 2005, vol. IV-25, 345